# EUROPÄISCHE PATENTSCHRIFT

(11) **EP 4 033 140 B1**
(45) Veröffentlichungstag und Bekanntmachung des Hinweises auf die Patenterteilung: **23.08.2023**
(21) Anmeldenummer: 21213330.0
(22) Anmeldetag: 09.12.2021
(51) Int. Cl.: F16P 3/14

(54) **SICHERHEITSSYSTEM UND VERFAHREN MIT EINEM SICHERHEITSSYSTEM**
SAFETY SYSTEM AND METHOD WITH A SAFETY SYSTEM
SYSTÈME DE SÉCURITÉ ET PROCÉDÉ COMPRENANT UN SYSTÈME DE SÉCURITÉ

(30) Priorität: 21.01.2021 DE 102021101180
(43) Veröffentlichungstag der Anmeldung: 27.07.2022
(73) Patentinhaber: SICK AG, 79183 Waldkirch (DE)
(72) Erfinder: Hammes, Markus, 79117 Freiburg (DE); Natzkowski, Carsten, 79108 Freiburg (DE)

(56) Entgegenhaltungen:
- EP-A1- 3 828 584
- US-A- 5 774 876
- US-A1- 2011 315 765
- US-B2- 8 648 709

## Beschreibung

Die vorliegende Erfindung betrifft ein Sicherheitssystem gemäß dem Oberbegriff von Anspruch 1 und ein Verfahren mit einem Sicherheitssystem gemäß dem Oberbegriff von Anspruch 15.

Es ist in der industriellen Sicherheitstechnik aktuelle Praxis, Gefährdungen lokal an der Gefährdungsstelle zu beherrschen, indem eine Annäherung oder Anwesenheit einer Person detektiert wird und sicherheitsgerichtet eine Maschine oder Fahrbewegung gestoppt oder die Bewegung verlangsamt wird.

Der Stand der Technik beschreibt lediglich lokale Sicherheitskonzepte.

Die US8648709B2 offenbart ein Ereigniswarnsystem. Das Ereigniswarnsystem kann personalisierte und aussagekräftige Alarmwarnungen in Echtzeit für einen Maschinenbediener/Fahrer und/oder für Fußgänger bereitstellen, die sich in Gefahr befinden oder sich einer Gefahr nähern. Anders als generische Warnungen wie Rückfahralarme und Blinklichter minimiert die personalisierte Alarm- und Benachrichtigungsfunktion der US8648709B2 die Alarmnachlässigkeit und maximiert ihre Wirksamkeit.

Die nachveröffentlichte_EP3828584A1 offenbart ein Sicherheitssystem zur Lokalisierung einer bewegbaren Maschine, mit einer Sicherheitssteuerung, mit mindestens einem Funkortungssystem, mit mindestens einem Sensor zur Positionsbestimmung, wobei das Funkortungssystem stationär angeordnete Funkstationen aufweist, wobei an der bewegbaren Maschine mindestens ein Funktransponder angeordnet ist, wobei mittels dem Funkortungssystem Positionsdaten der bewegbaren Maschine ermittelbar sind, wobei die Positionsdaten von der Funkstation oder dem Funktransponder des Funkortungssystems an die Sicherheitssteuerung übermittelbar sind, und mittels dem Sensor Positionsdaten der bewegbaren Maschine ermittelbar sind, wobei die Sicherheitssteuerung ausgebildet ist die Positionsdaten des Funkortungssystems und die Positionsdaten des Sensors zu vergleichen und bei einer Übereinstimmung geprüfte Positionsdaten zu bilden.

Die_US20110315765A1 offenbart ein Bestandskontrollsystem und -verfahren, welches eine Ortungsvorrichtung verwendet, die einem Umzugsfahrzeug zugeordnet ist, und identifiziert einen mit einem ID-Tag versehenen Gegenstand unter Verwendung eines ID-Lesegeräts, das ebenfalls dem Umzugsfahrzeug zugeordnet ist. Somit kann ein einzelnes, relativ teures Ortungsgerät vorübergehend mit dem Gegenstand verbunden werden, wodurch eine genaue Ortung einer Vielzahl von Gegenständen ermöglicht wird, wenn ein Umzugsunternehmen einen Inventarbereich durchquert. Der Anlagenstandort und die Identifikation können in einer Datenbank zugeordnet werden. Der Objektstandort kann verfeinert werden, indem zusätzliche Messgeräte verwendet werden, beispielsweise ein Gabelstapler-Höhensensor, um die Ausdehnung von einem Ortungsgerät zu bestimmen. Eine weitere Ausführungsform verwendet RFID- oder Barcode-Technologie für das ID-Tag. Die Ortungsvorrichtung kann Nahfeld-Ortungstechnologie, Gelegenheitssignale oder andere RTLS-Technologien verwenden.

Gemäß der US5774876A1 wird ein Objekt in einem Lagerbereich oder einem sich bewegenden Fahrzeug überwacht, indem ein elektronisches Etikett an dem Objekt angebracht wird. Eine elektronische Vorrichtung erkennt das Vorhandensein des Objekts durch Kommunizieren mit dem Etikett, während das Objekt gelagert oder durch das Fahrzeug bewegt wird. Die Etiketten können auch den Standort eines angebrachten Objekts bestimmen und das Objekt umleiten, wenn es von einem gegebenen Versandplan abweicht. Eine Gruppe von Objekten wird durch zwei elektronische Etiketten überwacht, die jeweils an einem Objekt in der Gruppe angebracht sind. Jedes Etikett hat eine Schaltung zum Kommunizieren von Informationen, die sich auf ein Objekt in der Gruppe beziehen, an ein zweites Etikett. Jedes Etikett enthält auch einen Speicher, der mit der Schaltung verbunden ist, die in der Lage ist, die Informationen zu speichern, und eine Steuerung, die mit dem Speicher und der Schaltung verbunden ist.

Eine Aufgabe der Erfindung besteht darin, ein verbessertes Sicherheitssystem bereitzustellen.

Die Aufgabe wird gemäß Anspruch 1 gelöst durch ein Sicherheitssystem zur Lokalisierung von mindestens einem ortsveränderlichen Objekt, mit mindestens einer Steuer- und Auswerteeinheit, mit mindestens einem Funkortungssystem, wobei das Funkortungssystem mindestens drei angeordnete Funkstationen aufweist, wobei an dem Objekt mindestens ein Funktransponder angeordnet ist, wobei mittels dem Funkortungssystem Positionsdaten des Funktransponders und damit Positionsdaten des Objekts ermittelbar ist, wobei die Positionsdaten von der Funkstation des Funkortungssystems an die Steuer- und Auswerteeinheit übermittelbar sind, wobei die Steuer- und Auswerteeinheit ausgebildet ist, die Positionsdaten des Funktransponders zyklisch zu erfassen, wobei eine erste Überprüfungseinheit vorgesehen ist, wobei die erste Überprüfungseinheit mit der Steuer- und Auswerteeinheit verbunden ist, wobei die Steuer- und Auswerteeinheit von der ersten Überprüfungseinheit überprüft wird.

Die Aufgabe wird weiter gemäß Anspruch 15 gelöst mit einem Verfahren mit einem Sicherheitssystem zur Lokalisierung von mindestens einem ortsveränderlichen Objekt, mit mindestens einer Steuer- und Auswerteeinheit, mit mindestens einem Funkortungssystem, wobei das Funkortungssystem mindestens drei angeordnete Funkstationen aufweist, wobei an dem Objekt mindestens ein Funktransponder angeordnet wird, wobei mittels dem Funkortungssystem Positionsdaten des Funktransponders und damit Positionsdaten des Objekts ermittelbar sind, wobei die Positionsdaten von der Funkstation des Funkortungssystems an die Steuer- und Auswerteeinheit übermittelbar sind, wobei die Steuer- und Auswerteeinheit ausgebildet ist, die Positionsdaten des Funktransponders zyklisch zu erfassen, wobei eine erste Überprüfungseinheit vorgesehen ist, wobei die erste Überprüfungseinheit mit der Steuer- und Auswerteeinheit verbunden ist, wobei die Steuer- und Auswerteeinheit von der ersten Überprüfungseinheit überprüft wird.

Gemäß der Erfindung liegt eine Architektur zur Umsetzung eines Sicherheitssystems, insbesondere eines sicheren RTLS-Systems vor. Das Sicherheitssystem ermöglicht es, geprüfte Positionsdaten von Objekten wie beispielsweise Personen und/oder mobilen Maschinen in einem Betriebsumfeld zu ermitteln und mit einem Plausibilitätsmaß zu versehen. Die geprüften Positionsdaten können genutzt werden, um mit den Funktranspondern die Situation bzw. die Objekte so zu beeinflussen, dass Gefährdungen vermieden werden.

Das Sicherheitssystem besteht mindestens aus den Funkstationen, der Steuer- und Auswerteeinheit, den Funktranspondern und der ersten Überprüfungseinheit.

Die Funkstationen dienen zur funkbasierten Kommunikation und Laufzeitmessung mit den ortveränderlichen Funktranspondern und zur Weiterleitung einer Kommunikation und von Laufzeitmesswerten an die Steuer- und Auswerteeinheit bzw. den RTLS-Server.

Die Steuer- und Auswerteeinheit bzw. ein zentraler RTLS-Server, empfängt die gemessenen Signallaufzeiten und ermittelt daraus Positionswerte der vorhandenen Funktransponder.

Die Ortung der Funktransponder erfolgt durch Laufzeitmessungen von Funksignalen, die zyklisch zwischen den Funktranspondern und mehreren festen Funkstationen ausgetauscht werden. Diese Triangulation funktioniert sehr gut, wenn die Signale mit ausreichender Signalstärke und auf geradem bzw. direkten Ausbreitungswege übermittelt werden.

Gemäß der Erfindung werden die Signale eines Funktransponders von mehreren ortsfesten Funkstationen bzw. Ankerstationen empfangen und über eine Laufzeitvermessung z.B. ,Time of arrival' (TOA) oder z.B. ,Time Difference of Arrival' (TDOA) die Grundlage für die Ortung geschaffen. Die Berechnung bzw. Schätzung der Position eines Funktransponders geschieht dann auf der Steuer- und Auswerteeinheit beispielsweise einem zentralen RTLS-Server (Real-Time-Location-System-Server), der über eine drahtlose oder drahtgebundene Datenverbindung an alle Funkstationen bzw. Ankerstationen angeschlossen ist. Diesen Modus der Ortung nennt man RTLS-Modus (Real-Time-Location-System-Modus).

Die erste Überprüfungseinheit bzw. ein sicherer RTLS Watchdog Controller, überwacht die Steuer- und Auswerteeinheit, wobei die erste Überprüfungseinheit beispielsweise die bestimmten Positionsdaten plausibilisiert, Umschaltsignale für einen Sicherheitsstatus der einzelnen Funktransponder sendet oder beispielsweise abhängig von der Situation Überprüfungseinheit-Rücksetzsignale an die Funktransponder initiiert.

Die erste Überprüfungseinheit und die Steuer- und Auswerteeinheit bilden damit mindestens ein einkanaliges System mit Testung gemäß ISO 13849 oder optional ein zweikanaliges System. Die erste Überprüfungseinheit stellt die notwendigen Diagnosemechanismen, wie sie beispielsweise von den einschlägigen Sicherheitsnormen gefordert werden, bereit.

Die erste Überprüfungseinheit bzw. ein RTLS-Watchdog Controller dient der Überwachung und Diagnose des Sicherheitssystems und der Steuer- und Auswerteeinheit und führt Sicherheitsfunktionen des Sicherheitssystems aus. Die erste Überprüfungseinheit verwendet die Steuer- und Auswerteeinheit beispielsweise als Kommunikations-Relais. Konkret überwacht die erste Überprüfungseinheit beispielsweise die korrekte Kommunikation zwischen den Funktranspondern, den Funkstationen und der Steuer- und Auswerteeinheit, überprüft das Zeitverhalten aller Komponenten und führt auf den ermittelten Daten Konsistenzprüfungen aus. Gegebenenfalls nutzt die erste Überprüfungseinheit hierzu auch einen Funktionsblock, der in der Steuer- und Auswerteeinheit bzw. dem RTLS-Server ausgeführt wird.

Die erste Überprüfungseinheit bzw. der RTLS-Watchdog Controller verwendet die geprüften Positionsdaten des RTLS-Systems und beispielsweise vorab per Konfiguration bereitgestellte Informationen über Gefahrenstellen, Details des Betriebsumfeldes usw. um eine Bewertung der lokalen Gefährdungen vorzunehmen. Im einfachsten Fall geschieht das, indem die Abstände zwischen Personen und Gefahrenstellen ermittelt werden und bei Unterschreitung einer Sicherheitsgrenze risikomindernde Maßnahmen eingeleitet werden. Eine Risikominderung basiert beispielsweise darin, dass die Überprüfungseinheit den Funktranspondern ein sicheres Abschalt- oder Umschaltsignal sendet, das diese beispielsweise an eine angeschlossene Maschine weitergeben oder, im Falle eines Funktransponders an einer Person ein Warnsignal oder Handlungsinstruktionen an die Person weitergeben.

Beispielsweise sind eine Vielzahl von Funktranspondern vorgesehen, beispielsweise an allen ortsveränderlichen Maschinen und Personen und ggf. auch an stationären Maschinen.

Die Funktransponder können zusätzliche Aufgaben haben und unterscheiden sich daher von den konventionellen Funktranspondern bzw. Tags. Neben der Unterstützung der Ortungsfunktion des RTLS-System kommen beispielsweise folgende Funktionen hinzu:
Funkbasierte Bestimmung der eigenen Position, beispielsweise eine inverse Funkortung auf Basis von Blink-Signalen der verschiedenen Funkstationen.

Alternativ kann eine Laufzeitmessung der Funkstationssignale durch den Funktransponder und eine Rückmeldung der Laufzeitunterschiede an die erste Überprüfungseinheit bzw. den RTLS-Watchdog Controller erfolgen, wonach optional eine Plausibilisierung der berechneten Funktransponderpositionen erfolgt.

Weiter erfolgt beispielsweise eine Übermittlung von Positions-, Status- und Diagnoseinformationen an die Steuer- und Auswerteeinheit und an die erste Überprüfungseinheit.

Um diese Funktionen ausführen zu können, weisen die Funktransponder beispielsweise eine bidirektionale Kommunikation mit der ersten Überprüfungseinheit auf.

Die Erfindung hat den Vorteil, dass sich damit die übergeordneten Sicherheitsfunktionen auf Basis von sicheren geprüften Positionsdaten realisieren lassen.

In Weiterbildung der Erfindung sind die Positionsdaten von dem Funktransponder an die Steuer- und Auswerteeinheit übermittelbar.

Gleichzeitig kann die Positionsinformation damit auch auf jedem Funktransponder ermittelt werden. In diesem Fall arbeitet das Sicherheitssystem vergleichbar mit dem GPS-Navigationssystem. Jeder Funktransponder empfängt die Signale der Funkstationen bzw. Ankerstationen, die in einem festen zeitlichen Bezug zueinander ausgesendet werden. Auch hier kann über die verschiedenen Laufzeitmessungen und die Kenntnis der Funkstationspositionen bzw. Ankerpositionen eine Positionsschätzung des Funktransponders vorgenommen werden. Der Funktransponder selbst berechnet seine Position und kann diese bei Bedarf mit Hilfe des Funksignals oder anderer drahtloser Datenverbindungen an den RTLS-Server übertragen.

Die Positionsbestimmung im GPS-Modus ist in verschiedener Hinsicht unabhängig von der Positionsbestimmung im RTLS-Modus:
- Die Berechnung findet beispielsweise nicht in der Steuer- und Auswerteeinheit statt, sondern lokal auf einem Funktransponder.
- Die Grundlage für die Positionsberechnung sind die ermittelten Laufzeiten der Signale der ortsfesten Funkstationen. Im Gegensatz dazu dienen im RTLS-Modus die Signale der Funktransponder zur Laufzeitberechnung.
- Die Entscheidung, welche Untermenge der vorhandenen Funkstationssignale zur Positionsberechnung verwendet werden, wird auf Basis der ermittelten Signalgüte und relativen Funkstationspositionen durch den Funktransponder getroffen. Damit wird eine Untermenge der vorhandenen Sendesignale benutzt. Im RTLS-Modus wird umgekehrt auf eine Untermenge der an den verschiedenen Funkstationen empfangenen Signale zurückgegriffen.

Diese Unabhängigkeit der Positionsbestimmung wird nun verwendet, um die Ortung zu überprüfen. Wenn beide Modi parallel betrieben werden, d.h. Positionsdaten sowohl im RTLS-Modus als auch im GPS-Modus ermittelt werden, dann kann auf diesem Weg ein diversitärer und redundanter Vergleich zur Überprüfung erfolgen. Voraussetzung ist die Zusammenführung beider Positionsinformationen in der Steuer- und Auswerteeinheit.

Die Funktransponder die an Personen, Fahrzeugen und/oder Maschinen angebracht werden, offenbaren über die Funkortung ihre Position im Raum und kommunizieren bidirektional mit den stationären Funkstationen.

Es ist beispielsweise eine bidirektionale Kommunikation zwischen Funktranspondern und Funkstationen möglich.

Es ist keine zusätzliche Funktechnologie wie W-LAN oder Bluetooth für die Kommunikation zwischen den Funkstationen und den Funktranspondern notwendig.

Die erste Überprüfungseinheit überprüft die Plausibilität der ermittelten Positionsdaten und versendet bei Erkennung von Fehlern oder unplausiblen Messwerten Signale zum Umschalten eines Sicherheitsstatus des betreffenden Funktransponders.

Das RTLS-System, wonach mittels dem Funkortungssystem Positionsdaten des Funktransponders und damit Positionsdaten der Objekte ermittelbar sind, ermittelt mit Funkortung die Positionen aller Funktransponder in einem festen zeitlichen Raster. Das RTLS-System arbeitet mit bidirektionaler Kommunikation zwischen den Funktranspondern und den Funkstationen. Das hat den Grund, dass zusätzlich die Funktransponder ihre Position selbst ermitteln können und mit Hilfe eines Funk-Rückkanals beispielsweise eines UWB-Rückkanals das Ergebnis der Ortung an die Steuer- und Auswerteeinheit übermitteln. Dadurch stehen in der Steuer- und Auswerteeinheit bzw. im RTLS-Server zwei unabhängig ermittelte Positionsinformationen zum Vergleich zur Verfügung. Nämliche erstens die durch die Funkstationen ermittelte Positionsinformationen und zweitens die durch die Funktransponder ermittelte Positionsinformationen. Alternativ können durch die Funktransponder Laufzeitmessungen der von den Funkstationen ausgesendeten Signale vorgenommen werden und lediglich die ermittelten Laufzeiten zur Plausibilisierung zur Steuer- und Auswerteeinheit zurückgemeldet werden. Das ist ausreichend für die Plausibilisierung der Positionsbestimmung. Zusätzlich kann die bidirektionale Kommunikation dazu verwendet werden Diagnoseinformationen oder andere Statusinformationen, die lokal auf den Transpondern ermittelt wurden, an den Watchdog-Controller weiterzugeben.

In der Erfindung weist der Funktransponder eine zweite Überprüfungseinheit auf. Die zweite Überprüfungseinheit führt ebenfalls eine Überwachungsfunktion durch. Die zweite Überprüfungseinheit kann beispielsweise auch als Funktransponder-Watchdog bezeichnet werden.

Gemäß der Erfindung weist der Funktransponder eine zweite Überprüfungseinheit auf die zyklisch über ein Signal von der ersten Überprüfungseinheit zurückgesetzt werden muss. Falls das Signal ausbleibt löst die zweite Überprüfungseinheit ein Sicherheitssignal aus.

Es kann auch vorgesehen sein, dass die erste Überprüfungseinheit ein Notstopp-Signal erzeugt, wenn von der zweiten Überprüfungseinheit kein zyklisches Signal mehr gesendet wird.

In Weiterbildung der Erfindung weist die erste Überprüfungseinheit und/oder die zweite Überprüfungseinheit jeweils einen Zeitgeber auf.

Der Zeitgeber kann integraler Bestandteil der zweiten Überprüfungseinheit bzw. des Funktransponders sein, der zyklisch von der ersten Überprüfungseinheit zurückgesetzt werden muss. Neben dem Senden des Reset-Signals legt die erste Überprüfungseinheit außerdem beispielsweise die Laufzeit des Zeitgebers in Abhängigkeit von einer vorliegenden Gefährdungssituation und einem Diagnosestatus fest.

In den zweiten Überprüfungseinheiten der Funktransponder läuft der Zeitgeber ab der über ein Reset-Signal der ersten Überprüfungseinheit zurückgesetzt werden kann.

Der Zeitgeber der zweiten Überprüfungseinheiten der Funktransponder ist beispielsweise abhängig vom Abstand des betreffenden Funktransponders zu einer nächsten Person oder Gefahrstelle, wobei abhängig vom Abstand eine längere Zeit bei einem größeren Abstand und eine kürzere Zeit bei einem kleineren Abstand vorgesehen ist.

Alternativ oder ergänzend kann der Zeitgeber auch abhängig von der Plausibilität der Positionsdaten oder abhängig von übergeordneten Prozessinformationen eingestellt werden. Wenn beispielsweise ein Roboter als Gefahrenstelle nicht aktiv ist, kann die Zeitgeberzeit verlängert werden.

Die erste Überprüfungseinheit setzt die Zeitgeber nur dann zurück, wenn die Positionsdaten nach einer Prüfung als gültig angesehen werden und wenn kein Fehlerzustand detektiert wurde.

Die erste Überprüfungseinheit legt die Zeiten der verschiedenen Zeitgeber abhängig von der minimalen Zeit bis zum Eintreten einer Gefährdung fest.

In Weiterbildung der Erfindung weisen die Zeitgeber der zweiten Überprüfungseinheiten jeweils einen individuellen Zeitwert auf.

Die Zeitgeber der zweiten Überprüfungseinheiten können individuell für jeden Funktransponder beispielsweise in Abhängigkeit der Situation unterschiedlich eingestellt werden.

Der integrierte Zeitgeber mit individuell einstellbarem Zeitwert bzw. Timerwert erlaubt zudem eine fehlersichere Implementierung und Umgehung von Problemen mit sicherer Funkkommunikation. Dadurch fallen aufwändige Kommunikationsmechanismen zur Absicherung der Funkkommunikation weg.

Der Zeitgeber der zweiten Überprüfungseinheit des Funktransponders wird im Normalfall, wenn keine Gefährdung vorliegt, zyklisch von der ersten Überprüfungseinheit über ein Reset-Signal zurückgesetzt bzw. neu eingestellt. Der Zeitgeber der Funktransponder kann individuell für jeden Funktransponder und in Abhängigkeit der Situation unterschiedlich eingestellt werden kann.

Wenn zum Beispiel ein großer Abstand zwischen Personen und einem autonomen Fahrzeug ermittelt wurde und bekannt ist, dass es mehrere Sekunden dauern würde, bis diese Personen in gefährliche Nähe zum Fahrzeug gelangen würden, dann kann der Zeitgeber entsprechend lang eingestellt werden. Umgekehrt würde ein kurzer Wert eingestellt, wenn sich die Personen bereits in der Nähe einer Gefahrenstelle befinden oder aufgrund von Positionsdaten mit geringer Zuverlässigkeit angenommen werden muss, dass sich Personen nah an Gefahrenstellen befinden.

In Weiterbildung der Erfindung sind die Positionsdaten von dem Funktransponder an die erste Überprüfungseinheit übermittelbar.

Damit werden die Positionsdaten von den Funktranspondern unabhängig an die Steuer- und Auswerteeinheit und an die erste Überprüfungseinheit übermittelt. Damit liegen die Positionsdaten in der Steuer- und Auswerteeinheit und in der ersten Überprüfungseinheit vor und können quergeprüft werden, wonach die erste Überprüfungseinheit die Positionsdaten der Steuer- und Auswerteeinheit überprüft und umgekehrt die Steuer- und Auswerteeinheit die Positionsdaten der ersten Überprüfungseinheit überprüft. Somit liegt ein zweikanaliges System vor und eine unabhängige redundante Übertragung der Positionswerte von den Funktranspondern.

In Weiterbildung der Erfindung weist der Funktransponder sichere Schaltausgänge und/oder eine sichere Schnittstelle bzw. Sicherheitsschnittstelle auf.

Der Funktransponder gibt über den Schaltausgang bzw. über die Sicherheitsschnittstelle ein sicheres Ausgangssignal aus, insbesondere an ein Fahrzeug oder eine Maschine. Beispielsweise wird das Fahrzeug daraufhin abgebremst, verlangsamt oder gar gestoppt. Eine Maschine kann beispielsweise daraufhin verlangsamt werden oder ebenfalls gestoppt werden.

Über die sicheren Schaltausgänge bzw. die Sicherheitsschnittstelle erfolgt eine Ausgabe sicherheitsrelevanter Signale an ein Fahrzeug oder an die Maschine.

Insbesondere der Funktransponder mit dem sicheren Schaltausgang erlaubt die direkte Einwirkung auf die Maschine und umgeht die Notwendigkeit über eine übergeordnete Maschinensteuerung Risikominderungsmaßnahmen einzuleiten.

Statt die sicheren Schaltausgänge zu schalten bzw. ein Schaltsignal auf der Sicherheitsschnittstelle auszugeben kann es auch vorgesehen sein, dass der Funktransponder auch eine andere Sicherheits-Maßnahme trifft bzw. veranlasst. Z.B. einen RoboterArm beispielsweise eines mobilen Roboters in eine sichere Position bewegen. Also eine Maßnahme einer Stopp-Kategorie 1 oder 2 nach entsprechender Norm. Gemäß einer Stopp Kategorie 0 wird eine Maschine wird "hart" gestoppt in dem Z.B. die sicheren Schaltausgänge ein Relais schalten, dass die Stromzufuhr zu bestimmten Teilen der Maschine unterbricht z.B. zum Motor einer Presse. Stopp Kategorie 1 bedeutet kontrolliert einen "sicheren" Zustand einnehmen, z.B. ein Kreissägeblatt schnell bremsen, eine Bewegung langsam stoppen und erst am Ende den Strom abschalten.

Bei einer Stopp Kategorie 2 bleibt eine Stromversorgung immer an, um einen sicheren Zustand zu halten. Z.B. den Strom von einem Elektro-Magnet an einem Kran anlassen, damit ein Teil, welches an dem Elektro-Magneten hängt, nicht herunter fällt, dass der Kran gerade transportiert.

Für eine Stopp Kategorie 1 und/oder 2 weist der Funktransponder beispielsweise bevorzugt die Sicherheitsschnittstelle auf. Diese Sicherheitsschnittstelle kann beispielsweise ein busbasierter Ausgang oder beispielsweise mindestens einen 1-aus-N Ausgang oder beispielsweise eine funkbasierte Schnittstelle, wie zum Beispiel Bluetooth, Bluetooth Low Energy, W-LAN, usw. sein, um mit der Steuerung der Maschine, einem mobilen Fahrzeug zu kommunizieren, auf der sich der Funktransponder befindet.

In Weiterbildung der Erfindung werden die sichere Schaltausgänge und/oder eine sichere Schnittstelle bzw. Sicherheitsschnittstelle betätigt, wenn eine eingestellte Zeit des Zeitgeber abläuft und nicht zurückgesetzt wurde.

Beispielsweise wird nach Ablaufen des Zeitgebers der zweiten Überprüfungseinheit am sicheren Schaltausgang des Funktransponders der entsprechende Status ausgegeben, ein Schaltausgang-Low Signal bzw. ein OSSD-LOW Signal.

Zusätzlich zu dem aktiv ausgesendeten Schaltsignal stellt die erste Überprüfungseinheit beispielsweise basierend auf der aktuellen Situation und dem Diagnosezustand zyklisch für jeden Funktransponder den Zeitgeber ein, der nach Ablauf auch ohne ein aktiv gesendetes Schaltsignal der ersten Überprüfungseinheit den Schaltausgang des Funktransponders in den sicheren Zustand umschaltet. Damit wird sichergestellt, dass auch bei Abreißen der Kommunikationsverbindung keine Gefährdung eintreten kann.

Beispielsweise ist es vorgesehen, dass der Funktransponder Zeitstempel ausliest, die in den Nachrichten von Funktranspondern enthalten sind und diese mit seinem eigenen Zeitgeber vergleicht. Wenn die Abweichung beispielsweise größer als ein voreingestellter Wert ist, dann schaltet der Funktransponder seine sicheren Schaltaugänge bzw. gibt ein Signal auf der Sicherheitsschnittstelle aus. Beispielsweise könnten die minimalen und maximalen Abweichungen zwischen Zeitstempel und Zeitgeber im laufenden Betrieb dynamisch angepasst werden, abhängig vom Ort des Funktransponders.

In Weiterbildung der Erfindung ist die erste Überprüfungseinheit und/oder die zweite Überprüfungseinheit jeweils ausgebildet eine Anzahl und/oder Art von Datentelegramme des Funktransponders zu überprüfen.

Gemäß der Weiterbilddung misst der Funktransponder nicht die Zeit an sich, sondern die Anzahl der Datentelegramme bzw. Daten-Pakete und/oder die Art der Datentelegramme. Beispielsweise überprüft der Funktransponder eine Summe einer bestimmten Sorte von Datentelegramme, die bei dem Funktransponder innerhalb einer vorgegebenen Zeit eintreffen. Wenn beispielsweise mehr und/oder weniger Datentelegramme/Datenpakete als eine Toleranz erlaubt, innerhalb eines bestimmten Zeitfenstern beim Funktransponder ankommen, dann erkennt der Funktransponder, dass die Datenübertragung gestört ist. Dann ergreift der Funktransponder beispielsweise eine Sicherheits-Maßnahme. Im einfachsten Fall schaltet der Funktransponder beispielsweise seine Sicherheitsschaltausgänge.

Beispielsweise sind die Toleranzgrenzen abhängig von der Position des Funktransponders im Raum oder beispielsweise von der Zuordnung zu einem bestimmten örtlich begrenzen Bereich einer Werkhalle. D.h. die min. und max. Abweichungen werden beispielsweise im Betrieb dynamisch angepasst abhängig vom Ort.

In Weiterbildung der Erfindung weist der Funktransponder eine Ausgabeschnittstelle für Warnungen oder Instruktionen auf. Insbesondere ist der Funktransponder an einer Person angeordnet.

Die Ausgabeschnittstelle kann ausgebildet sein, beispielsweise optische oder akustische Warnungen oder Instruktionen an Personen auszugeben. Beispielsweise sind für die optischen Warnungen Anzeigeelemente oder ein Display vorgesehen. Akustische Warnungen werden über Signaltöne oder auch beispielsweise über eine Sprachausgabe realisiert.

Dabei kann es sich insbesondere um sicherheitsbezogene Warnungen an die Person handeln.

In Weiterbildung der Erfindung weisen die Funktransponder eine Identifikation auf, wobei jeweils ein Funktransponder jeweils einem Objekt zugeordnet ist, wodurch die Steuer- und Auswerteeinheit ausgebildet ist, die Objekte zu unterscheiden.

Beispielsweise sind erste Objekte mobile Objekte und zweite Objekte mobile Objekte, wobei die Funktransponder eine Identifikation aufweisen, wobei jeweils ein Funktransponder einem mobilen Objekt zugeordnet ist, wodurch die Steuer- und Auswerteeinheit ausgebildet ist, die mobilen Objekte zu unterscheiden, wobei die Steuer- und Auswerteeinheit ausgebildet ist, jedem mobilen Objekt eine Risikokennzahl zuzuordnen mindestens abhängig von der Position von einem mobilen Objekt zu mindestens einem anderen mobilen Objekt.

Bei dem mobilen Objekt, bzw. einer bewegbaren Maschine bzw. mobilen Maschine kann es sich beispielsweise um ein führerloses Fahrzeug, fahrerloses Fahrzeug bzw. autonomes Fahrzeug, um ein autonom geführtes Fahrzeug (Autonomous Guided Vehicles, AGV), um einen automatisch mobilen Roboter (Automated Mobile Robots, AMR), um einen industriemobilen Roboter (Industrial Mobile Robots, IMR) oder um einen Roboter mit bewegbaren Roboterarmen handeln. Die mobile Maschine weist somit einen Antrieb auf und kann in verschiedenen Richtungen bewegt werden.

Weiter sind beispielsweise erste Objekte Personen und zweite Objekte mobile Objekte, wobei die Funktransponder eine Identifikation aufweisen, wobei jeweils ein Funktransponder mindestens einer Person und jeweils ein Funktransponder mindestens einem mobilen Objekt zugeordnet ist, wodurch die Steuer- und Auswerteeinheit ausgebildet ist, die Personen und mobilen Objekte zu unterscheiden, wobei die Steuer- und Auswerteeinheit ausgebildet ist, jeder Person eine Risikokennzahl zuzuordnen mindestens abhängig von der Position der Person zu mindestens einem mobilen Objekt.

In Weiterbildung der Erfindung sind die Funktransponder ausgebildet sichere Steuersignale für eine Einleitung von Risikominderungsmaßnahmen an die Steuer- und Auswerteeinheit zu übertragen.

Damit kann ausgehend von dem Funktransponder und damit ausgehend von dem Objekt eine Risikominderungsmaßnahme an der Steuer- und Auswerteeinheit ausgelöst werden. Beispielsweise wird ausgehend von einer Objektbewegung und damit ausgehend von einer Bewegung des Funktransponders eine Risikominderungsmaßnahme eingeleitet, nämlich beispielsweise eine Maschine gestoppt, aufgrund einer Bewegung des Funktransponders in Richtung der Gefahrbringenden Bewegung der Maschine.

In Weiterbildung der Erfindung ist die Steuer- und Auswerteeinheit ausgebildet sichere Steuersignale für eine Einleitung von Risikominderungsmaßnahmen an die Funktransponder zu übertragen.

Damit kann ausgehend von einem erkannten Risiko im Sicherheitssystem eine Risikominderungsmaßnahme im Funktransponder oder in mehreren oder vielen Funktranspondern ausgelöst werden. Beispielsweise wird ausgehend von einer Objektbewegung und damit ausgehend von einer Bewegung des Funktransponders eine Risikominderungsmaßnahme eingeleitet, nämlich beispielsweise mehrere Fahrzeuge verlangsamt oder gar gestoppt, aufgrund einer Bewegung des Funktransponders einer Person in Richtung der Fahrzeuge.

In Weiterbildung der Erfindung ist das Funkortungssystem ein Ultrabreitband-Funkortungssystem ist, wobei die verwendete Frequenz im Bereich von 3,1 GHz bis 10,6 GHz ist, wobei die Sendeenergie pro Funkstation maximal 0,5 mW beträgt.

Eine absolute Bandbreite beträgt bei einem Ultrabreitband-Funkortungssystem wenigstens 500 MHz oder eine relative Bandbreite beträgt mindestens 20% der zentralen Frequenz.

Die Reichweite eines derartigen Funkortungssystems beträgt beispielsweise 0 bis 50 m. Dabei wird die kurze zeitliche Dauer der Funkpulse für die Ortung benutzt.

Das Funkortungssystem sendet damit nur Funkwellen mit einer niedrigen Energie aus. Das System ist sehr flexibel einsetzbar und weist keine Interferenzen auf.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
Figur 1 bis 3 jeweils ein Sicherheitssystem;
Figur 4 bis 5 jeweils einen Teil eines Sicherheitssystems.

In den nachfolgenden Figuren sind identische Teile mit identischen Bezugszeichen versehen.

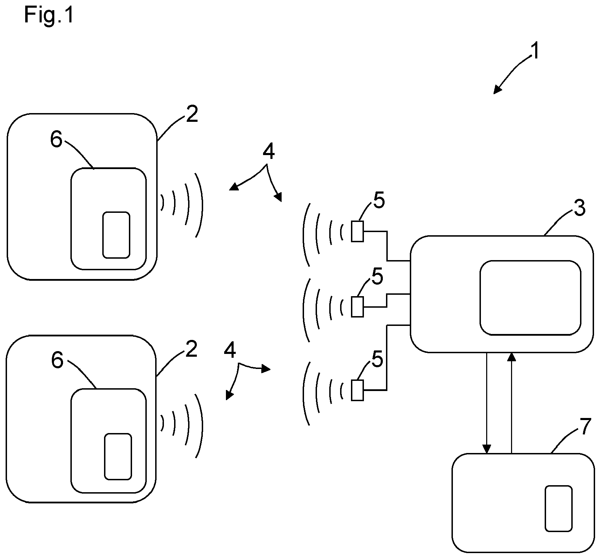

Figur 1 zeigt Sicherheitssystem 1 zur Lokalisierung von mindestens einem ortsveränderlichen Objekt 2, mit mindestens einer Steuer- und Auswerteeinheit 3, mit mindestens einem Funkortungssystem 4, wobei das Funkortungssystem 4 mindestens drei angeordnete Funkstationen 5 aufweist, wobei an dem Objekt 2 mindestens ein Funktransponder 6 angeordnet ist, wobei mittels dem Funkortungssystem 4 Positionsdaten des Funktransponders 6 und damit Positionsdaten des Objekts 2 ermittelbar ist, wobei die Positionsdaten von der Funkstation 5 des Funkortungssystems 4 an die Steuer- und Auswerteeinheit 3 übermittelbar sind, und/oder die Positionsdaten von dem Funktransponder 6 an die Steuer- und Auswerteeinheit 3 übermittelbar sind, wobei die Steuer- und Auswerteeinheit 3 ausgebildet ist, die Positionsdaten des Funktransponders 6 zyklisch zu erfassen, wobei eine erste Überprüfungseinheit 7 vorgesehen ist, wobei die erste Überprüfungseinheit 7 mit der Steuer- und Auswerteeinheit 3 verbunden ist, wobei die Steuer- und Auswerteeinheit 3 von der ersten Überprüfungseinheit 7 überprüft wird.

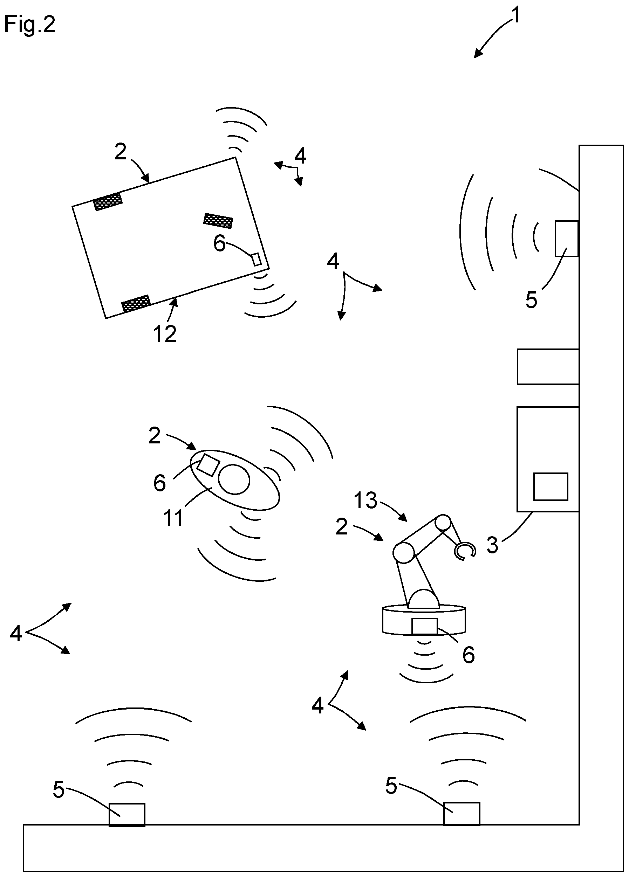

Das Sicherheitssystem 1 gemäß Figur 2 ermöglicht es, geprüfte Positionsdaten von Objekten 2 wie beispielsweise Personen 11 und mobilen Maschinen 12 in einem Betriebsumfeld zu ermitteln und mit einem Plausibilitätsmaß zu versehen. Die geprüften Positionsdaten können genutzt werden, um mit den Funktranspondern 6 die Situation bzw. die Objekte 2 so zu beeinflussen, dass Gefährdungen vermieden werden.

Das Sicherheitssystem 1 gemäß Figur 1 besteht mindestens aus den Funkstationen 5, der Steuer- und Auswerteeinheit 3, den Funktranspondern 6 und der ersten Überprüfungseinheit 7.

Die Funkstationen 5 dienen zur funkbasierten Kommunikation und Laufzeitmessung mit den ortveränderlichen Funktranspondern 6 und zur Weiterleitung einer Kommunikation und von Laufzeitmesswerten an die Steuer- und Auswerteeinheit 3 bzw. den RTLS-Server.

Die Steuer- und Auswerteeinheit 3 bzw. ein zentraler RTLS-Server, empfängt die gemessenen Signallaufzeiten und ermittelt daraus Positionswerte der vorhandenen Funktransponder 6.

Die Ortung der Funktransponder 6 erfolgt durch Laufzeitmessungen von Funksignalen, die zyklisch zwischen den Funktranspondern 6 und mehreren festen Funkstationen 5 ausgetauscht werden.

Gemäß Figur 1 werden die Signale eines Funktransponders 2 von mehreren ortsfesten Funkstationen 5 bzw. Ankerstationen empfangen und über eine Laufzeitvermessung z.B. Time of arrival' (TOA) oder z.B. Time Difference of Arrival' (TDOA) die Grundlage für die Ortung geschaffen. Die Berechnung bzw. Schätzung der Position eines Funktransponders 6 geschieht dann auf der Steuer- und Auswerteeinheit 3 beispielsweise einem zentralen RTLS-Server (Real-Time-Location-System-Server), der über eine drahtlose oder drahtgebundene Datenverbindung an alle Funkstationen 5 bzw. Ankerstationen angeschlossen ist. Diesen Modus der Ortung nennt man RTLS-Modus (Real-Time-Location-System-Modus).

Gleichzeitig können die Positionsinformation jedoch auch auf jedem Funktransponder 6 ermittelt werden. In diesem Fall arbeitet das Sicherheitssystem 1 vergleichbar mit dem GPS-Navigationssystem. Jeder Funktransponder 6 empfängt die Signale der Funkstationen 5 bzw. Ankerstationen, die in einem festen zeitlichen Bezug zueinander ausgesendet werden. Auch hier kann über die verschiedenen Laufzeitmessungen und die Kenntnis der Funkstationspositionen bzw. Ankerpositionen eine Positionsschätzung des Funktransponders 6 vorgenommen werden. Der Funktransponder 6 selbst berechnet seine Position und kann diese bei Bedarf mit Hilfe des Funksignals oder anderer drahtloser Datenverbindungen an die Steuer- und Auswerteeinheit 3 bzw. den RTLS-Server übertragen.

Diese Unabhängigkeit der Positionsbestimmung kann nun verwendet werden, um die Ortung zu überprüfen. Wenn beide Modi parallel betrieben werden, d.h. Positionsdaten sowohl im RTLS-Modus als auch im GPS-Modus ermittelt werden, dann kann auf diesem Weg ein diversitärer und redundanter Vergleich zur Überprüfung erfolgen. Voraussetzung ist die Zusammenführung beider Positionsinformationen in der Steuer- und Auswerteeinheit 3.

Die erste Überprüfungseinheit 7 bzw. ein sicherer RTLS Watchdog Controller, überwacht die Steuer- und Auswerteeinheit 3, wobei die erste Überprüfungseinheit 7 beispielsweise die bestimmten Positionsdaten plausibilisiert, Umschaltsignale für einen Sicherheitsstatus der einzelnen Funktransponder 6 sendet oder beispielsweise abhängig von der Situation Überprüfungseinheit-Rücksetzsignale an die Funktransponder 6 initiiert.

Die erste Überprüfungseinheit 7 und die Steuer- und Auswerteeinheit 3 bilden damit ein zweikanaliges System.

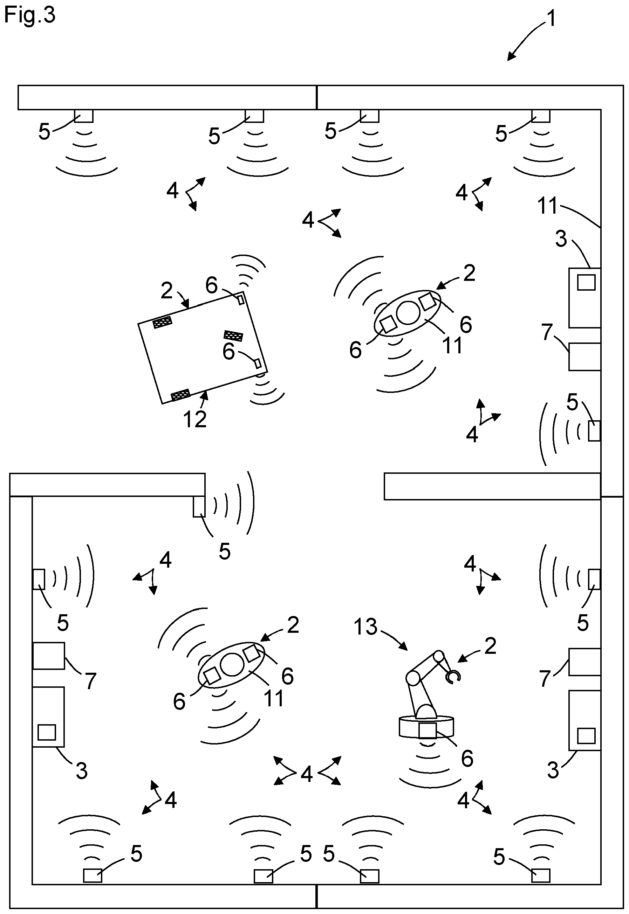

Die Funktransponder 6 die gemäß Figur 2 oder Figur 3 an Personen 11, Fahrzeugen 12 und/oder Maschinen 13 angebracht werden, offenbaren über die Funkortung ihre Position im Raum und kommunizieren bidirektional mit den stationären Funkstationen 5.

Es ist beispielsweise eine bidirektionale Kommunikation zwischen Funktranspondern 6 und Funkstationen 5 möglich.

Es ist keine zusätzliche Funktechnologie wie W-LAN oder Bluetooth für die Kommunikation zwischen den Funkstationen 5 und den Funktranspondern 6 notwendig.

Die erste Überprüfungseinheit 7 überprüft die Plausibilität der ermittelten Positionsdaten und versendet bei Erkennung von Fehlern oder unplausiblen Messwerten Signale zum Umschalten eines Sicherheitsstatus des betreffenden Funktransponders 6.

Das RTLS-System, wonach mittels dem Funkortungssystem 4 Positionsdaten des Funktransponders 6 und damit Positionsdaten der Objekte 2 ermittelbar sind, ermittelt mit Funkortung die Positionen aller Funktransponder 6 in einem festen zeitlichen Raster. Das RTLS-System arbeitet mit bidirektionaler Kommunikation zwischen den Funktranspondern 6 und den Funkstationen 5.

Die erste Überprüfungseinheit 7 bzw. ein RTLS-Watchdog Controller dient der Überwachung und Diagnose des Sicherheitssystems 1 und der Steuer- und Auswerteeinheit 3 und führt Sicherheitsfunktionen des Sicherheitssystems 1 aus. Die erste Überprüfungseinheit 7 verwendet die Steuer- und Auswerteeinheit 3 als Kommunikations-Relais. Konkret überwacht die erste Überprüfungseinheit 7 beispielsweise die korrekte Kommunikation zwischen den Funktranspondern 6, den Funkstationen 5 und der Steuer- und Auswerteeinheit 3, überprüft das Zeitverhalten aller Komponenten und führt auf den ermittelten Daten Konsistenzprüfungen aus. Gegebenenfalls nutzt die erste Überprüfungseinheit 7 hierzu auch einen Funktionsblock, der in der Steuer- und Auswerteeinheit 3 bzw. dem RTLS-Server ausgeführt wird.

Die erste Überprüfungseinheit 7 bzw. der RTLS-Watchdog Controller verwendet die geprüften Positionsdaten des RTLS-Systems und beispielsweise vorab per Konfiguration bereitgestellte Informationen über Gefahrenstellen, Details des Betriebsumfeldes usw. um eine Bewertung der lokalen Gefährdungen vorzunehmen. Im einfachsten Fall geschieht das, indem die Abstände zwischen Personen 11 und Gefahrenstellen ermittelt werden und bei Unterschreitung einer Sicherheitsgrenze risikomindernde Maßnahmen eingeleitet werden.

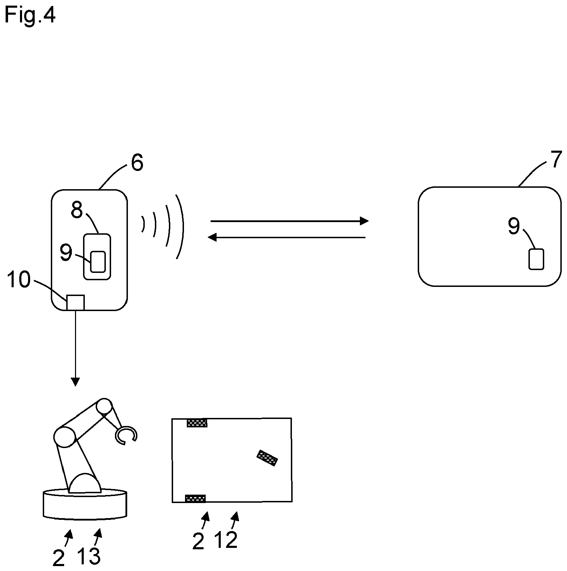

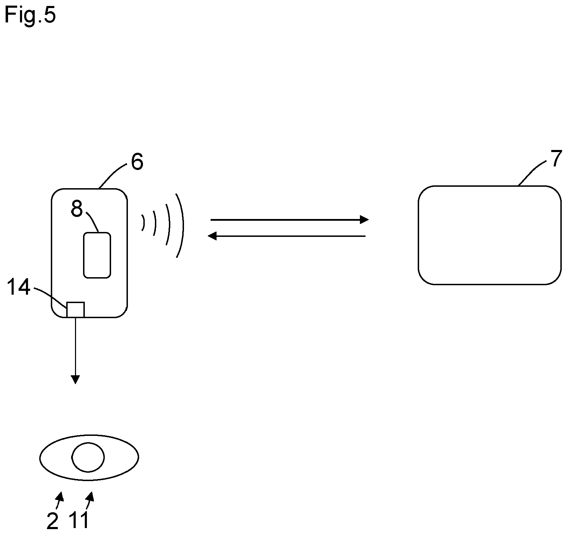

Eine Risikominderung basiert beispielsweise gemäß Figur 4 darin, dass die Überprüfungseinheit 7 den Funktranspondern 6 ein sicheres Abschalt- oder Umschaltsignal sendet, das diese beispielsweise an eine angeschlossene Maschine 13 weitergeben oder, im Falle eines Funktransponders 6 gemäß Figur 5 an eine Person 2 ein Warnsignal oder Handlungsinstruktionen an die Person 2 weitergeben.

Gemäß Figur 2 und Figur 3 sind beispielsweise eine Vielzahl von Funktransponder 6 vorgesehen, beispielsweise an allen ortsveränderlichen Maschinen 12 und Personen 11 und ggf. auch an stationären Maschinen 13.

Die Funktransponder 6 können zusätzliche Aufgaben haben und unterscheiden sich daher von den konventionellen Funktranspondern bzw. Tags. Neben der Unterstützung der Ortungsfunktion des RTLS-System kommen beispielsweise folgende Funktionen hinzu:
Funkbasierte Bestimmung der eigenen Position, beispielsweise eine inverse Funkortung auf Basis von Blink-Signalen der verschiedenen Funkstationen 5.

Alternativ kann eine Laufzeitmessung der Funkstationssignale durch den Funktransponder 6 und eine Rückmeldung der Laufzeitunterschiede an die erste Überprüfungseinheit 7 bzw. den RTLS-Watchdog Controller erfolgen, wonach optional eine Plausibilisierung der berechneten Funktransponderpositionen erfolgt.

Weiter erfolgt beispielsweise eine Übermittlung von Positions-, Status- und Diagnoseinformationen an die Steuer- und Auswerteeinheit 3 und an die erste Überprüfungseinheit 7.

Um diese Funktionen ausführen zu können, weisen die Funktransponder 6 eine bidirektionale Kommunikation mit der ersten Überprüfungseinheit 7 auf.

Gemäß Figur 4 weist der Funktransponder eine zweite Überprüfungseinheit 8 auf. Die zweite Überprüfungseinheit 8 führt ebenfalls eine Überwachungsfunktion durch. Die zweite Überprüfungseinheit 8 kann beispielsweise auch als Funktransponder-Watchdog bezeichnet werden.

Der Funktransponder 6 weist eine zweite Überprüfungseinheit 8 auf die zyklisch über ein Signal von der ersten Überprüfungseinheit 7 zurückgesetzt werden muss. Falls das Signal ausbleibt löst die zweite Überprüfungseinheit 8 ein Sicherheitssignal aus.

Es kann auch vorgesehen sein, dass die erste Überprüfungseinheit 7 ein Notstopp-Signal erzeugt, wenn von der zweiten Überprüfungseinheit 8 kein zyklisches Signal mehr gesendet wird.

Gemäß Figur 4 weisen die Überprüfungseinheiten 7 und 8 jeweils einen Zeitgeber 9 auf.

Der Zeitgeber 9 kann integraler Bestandteil der zweiten Überprüfungseinheit 7 oder 8 bzw. des Funktransponder 6 sein, der zyklisch von der ersten Überprüfungseinheit 7 zurückgesetzt werden muss. Neben dem Senden des Reset-Signals legt die erste Überprüfungseinheit 7 außerdem beispielsweise die Laufzeit des Zeitgebers in Abhängigkeit von einer vorliegenden Gefährdungssituation und einem Diagnosestatus fest.

In der zweiten Überprüfungseinheit 8 des Funktransponders 6 läuft der Zeitgeber ab der über ein Reset-Signal der ersten Überprüfungseinheit 7 zurückgesetzt werden kann. Der Zeitgeber 9 der zweiten Überprüfungseinheit 8 des Funktransponders 6 ist abhängig vom Abstand des betreffenden Funktransponders 6 zu einer nächsten Person gemäß Figur 5 oder Gefahrstelle gemäß Figur 4, wobei abhängig vom Abstand eine längere Zeit bei einem größeren Abstand und eine kürzere Zeit bei einem kleineren Abstand vorgesehen ist.

Die erste Überprüfungseinheit 7 setzt die Zeitgeber 9 nur dann zurück, wenn die Positionsdaten nach einer Prüfung als gültig angesehen werden und wenn kein Fehlerzustand detektiert wurde.

Die erste Überprüfungseinheit 7 legt die Zeiten der verschiedenen Zeitgeber 9 abhängig von der minimalen Zeit bis zum Eintreten einer Gefährdung fest.

Beispielsweise weisen die Zeitgeber 9 der zweiten Überprüfungseinheiten 8 jeweils einen individuellen Zeitwert auf.

Die Zeitgeber 9 der zweiten Überprüfungseinheiten 8 können individuell für jeden Funktransponder 6 beispielsweise in Abhängigkeit der Situation unterschiedlich eingestellt werden.

Der integrierte Zeitgeber 9 mit individuell einstellbarem Zeitwert bzw. Timerwert erlaubt zudem eine fehlersichere Implementierung und Umgehung von Problemen mit sicherer Funkkommunikation. Dadurch fallen aufwändige Kommunikationsmechanismen zur Absicherung der Funkkommunikation weg.

Der Zeitgeber 9 der zweiten Überprüfungseinheit 8 des Funktransponders 6 wird im Normalfall, wenn keine Gefährdung vorliegt, zyklisch von der ersten Überprüfungseinheit über ein Reset-Signal zurückgesetzt bzw. neu eingestellt. Der Zeitgeber 9 der Funktransponder 6 kann individuell für jeden Funktransponder 6 und in Abhängigkeit der Situation unterschiedlich eingestellt werden kann.

Wenn zum Beispiel ein großer Abstand zwischen Personen 11 und einem autonomen Fahrzeug 12 ermittelt wurde und bekannt ist, dass es mehrere Sekunden dauern würde, bis diese Personen 11 in gefährliche Nähe zum Fahrzeug 12 gelangen würden, dann kann der Zeitgeber 9 entsprechend lang eingestellt werden. Umgekehrt würde ein kurzer Wert eingestellt, wenn sich die Personen 11 bereits in der Nähe einer Gefahrenstelle befinden oder aufgrund von Positionsdaten mit geringer Zuverlässigkeit angenommen werden muss, dass sich Personen 11 nah an Gefahrenstellen befinden.

Gemäß Figur 4 sind die Positionsdaten von dem Funktransponder 6 an die erste Überprüfungseinheit 7 übermittelbar.

Damit werden die Positionsdaten von den Funktranspondern 6 unabhängig an die Steuer- und Auswerteeinheit 3 und an die erste Überprüfungseinheit 7 übermittelt. Damit liegen die Positionsdaten in der Steuer- und Auswerteeinheit 3 und in der ersten Überprüfungseinheit 7 vor und können quergeprüft werden, wonach die erste Überprüfungseinheit 7 die Positionsdaten der Steuer- und Auswerteeinheit 3 überprüft und umgekehrt die Steuer- und Auswerteeinheit 3 die Positionsdaten der ersten Überprüfungseinheit 7 überprüft. Somit liegt ein zweikanaliges System vor und eine unabhängige redundante Übertragung der Positionswerte von den Funktranspondern 6.

Gemäß Figur 4 weist der Funktransponder 6 sichere Schaltausgänge 10 oder eine Sicherheitsschnittstelle auf.

Der Funktransponder 6 gibt über den Schaltausgang 10 bzw. über die Sicherheitsschnittstelle ein sicheres Ausgangssignal aus, insbesondere an ein Fahrzeug 12 oder eine Maschine 13. Beispielsweise wird das Fahrzeug 12 daraufhin abgebremst, verlangsamt oder gar gestoppt. Eine Maschine 13 kann beispielsweise daraufhin verlangsamt werden oder ebenfalls gestoppt werden.

Über die sicheren Schaltausgänge 10 bzw. die Sicherheitsschnittstelle erfolgt eine Ausgabe sicherheitsrelevanter Signale an ein Objekt 2 insbesondere ein Fahrzeug 12 oder an die Maschine 13.

Insbesondere der Funktransponder 6 mit dem sicheren Schaltausgang 10 erlaubt die direkte Einwirkung auf die Maschine 13 und umgeht die Notwendigkeit über eine übergeordnete Maschinensteuerung Risikominderungsmaßnahmen einzuleiten.

Beispielsweise wird nach Ablaufen des Zeitgebers 9 der zweiten Überprüfungseinheit 8 am sicheren Schaltausgang 10 des Funktransponders 6 der entsprechende Status ausgegeben.

Zusätzlich zu dem aktiv ausgesendeten Schaltsignal stellt die erste Überprüfungseinheit 7 beispielsweise basierend auf der aktuellen Situation und dem Diagnosezustand zyklisch für jeden Funktransponder 6 den Zeitgeber 9 ein, der nach Ablauf auch ohne ein aktiv gesendetes Schaltsignal der ersten Überprüfungseinheit 7 den Schaltausgang 10 des Funktransponders 6 in den sicheren Zustand umschaltet. Damit wird sichergestellt, dass auch bei Abreißen der Kommunikationsverbindung keine Gefährdung eintreten kann.

Gemäß Figur 5 weist der Funktransponder 6 eine Ausgabeschnittstelle 14 für Warnungen oder Instruktionen auf. Insbesondere ist der Funktransponder 6 an einer Person 11 angeordnet.

Die Ausgabeschnittstelle 14 kann ausgebildet sein, beispielsweise optische oder akustische Warnungen oder Instruktionen an Personen 11 auszugeben. Beispielsweise sind für die optischen Warnungen Anzeigeelemente oder ein Display vorgesehen. Akustische Warnungen werden über Signaltöne oder auch beispielsweise über eine Sprachausgabe realisiert.

Dabei kann es sich insbesondere um sicherheitsbezogene Warnungen an die Person 11 handeln.

Beispielsweise weisen die Funktransponder 6 eine Identifikation auf, wobei jeweils ein Funktransponder 6 jeweils einem Objekt zugeordnet ist, wodurch die Steuer- und Auswerteeinheit 3 ausgebildet ist, die Objekte 2 zu unterscheiden.

Beispielsweise sind erste Objekte 2 mobile Objekte und zweite Objekte 2 mobile Objekte, wobei die Funktransponder 6 eine Identifikation aufweisen, wobei jeweils ein Funktransponder 6 einem mobilen Objekt zugeordnet ist, wodurch die Steuer- und Auswerteeinheit 3 ausgebildet ist, die mobilen Objekte zu unterscheiden, wobei die Steuer- und Auswerteeinheit 3 ausgebildet ist, jedem mobilen Objekt eine Risikokennzahl zuzuordnen mindestens abhängig von der Position von einem mobilen Objekt zu mindestens einem anderen mobilen Objekt.

Bei dem mobilen Objekt, bzw. einer bewegbaren Maschine bzw. mobilen Maschine 12 kann es sich beispielsweise um ein führerloses Fahrzeug, fahrerloses Fahrzeug bzw. autonomes Fahrzeug, um ein autonom geführtes Fahrzeug (Autonomous Guided Vehicles, AGV), um einen automatisch mobilen Roboter (Automated Mobile Robots, AMR), um einen industriemobilen Roboter (Industrial Mobile Robots, IMR) oder um einen Roboter mit bewegbaren Roboterarmen handeln. Die mobile Maschine weist somit einen Antrieb auf und kann in verschiedenen Richtungen bewegt werden.

Weiter sind beispielsweise erste Objekte Personen 11 und zweite Objekte mobile Objekte, wobei die Funktransponder 6 eine Identifikation aufweisen, wobei jeweils ein Funktransponder 6 mindestens einer Person 11 und jeweils ein Funktransponder 6 mindestens einem mobilen Objekt zugeordnet ist, wodurch die Steuer- und Auswerteeinheit 3 ausgebildet ist, die Personen 11 und mobilen Objekte zu unterscheiden, wobei die Steuer- und Auswerteeinheit 3 ausgebildet ist, jeder Person 11 eine Risikokennzahl zuzuordnen mindestens abhängig von der Position der Person 11 zu mindestens einem mobilen Objekt.

Gemäß Figur 4 sind die Funktransponder 6 ausgebildet sichere Steuersignale für eine Einleitung von Risikominderungsmaßnahmen an die Steuer- und Auswerteeinheit 3 zu übertragen.

Damit kann ausgehend von dem Funktransponder 6 und damit ausgehend von dem Objekt 2 eine Risikominderungsmaßnahme an der Steuer- und Auswerteeinheit 3 ausgelöst werden. Beispielsweise wird ausgehend von einer Objektbewegung und damit ausgehend von einer Bewegung des Funktransponders 6 eine Risikominderungsmaßnahme eingeleitet, nämlich beispielsweise eine Maschine 13 gestoppt, aufgrund einer Bewegung des Funktransponders 6 in Richtung der Gefahrbringenden Bewegung der Maschine 13.

Gemäß Figur 4 ist die Steuer- und Auswerteeinheit 3 ausgebildet sichere Steuersignale für eine Einleitung von Risikominderungsmaßnahmen an die Funktransponder 6 zu übertragen.

Damit kann ausgehend von einem erkannten Risiko im Sicherheitssystem eine Risikominderungsmaßnahme im Funktransponder 6 oder in mehreren oder vielen Funktranspondern 6 ausgelöst werden. Beispielsweise wird ausgehend von einer Objektbewegung und damit ausgehend von einer Bewegung des Funktransponders 6 eine Risikominderungsmaßnahme eingeleitet, nämlich beispielsweise mehrere Fahrzeuge 12 verlangsamt oder gar gestoppt, aufgrund einer Bewegung des Funktransponders 6 einer Person 11 in Richtung der Fahrzeuge 12.

Beispielsweise ist das Funkortungssystem 4 ein Ultrabreitband-Funkortungssystem ist, wobei die verwendete Frequenz im Bereich von 3,1 GHz bis 10,6 GHz ist, wobei die Sendeenergie pro Funkstation maximal 0,5 mW beträgt.

### Bezugszeichen:

1 Sicherheitssystem
2 Objekte
3 Steuer- und Auswerteeinheit
4 Funkortungssystem
5 Funkstationen
6 Funktransponder
7 erste Überprüfungseinheit
8 zweite Überprüfungseinheit
9 Zeitgeber
10 sichere Schaltausgänge
11 Personen
12 mobile Maschine, Fahrzeuge
13 Maschine
14 Ausgabeschnittstelle

## Patentansprüche

1. Sicherheitssystem (1) zur Lokalisierung von mindestens einem ortsveränderlichen Objekt (2), mit mindestens einer Steuer- und Auswerteeinheit (3), mit mindestens einem Funkortungssystem (4),
wobei das Funkortungssystem (4) mindestens drei angeordnete Funkstationen (5) aufweist,
wobei an dem Objekt (2) mindestens ein Funktransponder (6) angeordnet ist, wobei mittels dem Funkortungssystem (4) Positionsdaten des Funktransponders und damit Positionsdaten des Objekts (2) ermittelbar ist,
wobei die Positionsdaten von der Funkstation (5) des Funkortungssystems (4) an die Steuer- und Auswerteeinheit (3) übermittelbar sind,
wobei
die Steuer- und Auswerteeinheit (3) ausgebildet ist, die Positionsdaten des Funktransponders (6) zyklisch zu erfassen,
wobei eine erste Überprüfungseinheit (7) vorgesehen ist, wobei die erste Überprüfungseinheit (7) mit der Steuer- und Auswerteeinheit (3) verbunden ist, wobei die Steuer- und Auswerteeinheit (3) von der ersten Überprüfungseinheit (7) überprüft wird, **dadurch gekennzeichnet, dass** die Funktransponder (6) jeweils eine zweite Überprüfungseinheit (8) aufweisen, wobei die zweite Überprüfungseinheit (8) zyklisch über ein Signal von der ersten Überprüfungseinheit (7) zurückgesetzt wird.

2. Sicherheitssystem (1) nach Anspruch 1, **dadurch gekennzeichnet, dass** die Positionsdaten von dem Funktransponder (6) an die Steuer- und Auswerteeinheit (3) übermittelbar sind.

3. Sicherheitssystem (1) nach mindestens einem der vorhergehenden Ansprüche, **dadurch gekennzeichnet, dass** die erste Überprüfungseinheit (7) und/oder die zweite Überprüfungseinheit (8) jeweils einen Zeitgeber (9) aufweist.

4. Sicherheitssystem (1) nach Anspruch 3, **dadurch gekennzeichnet, dass** die Zeitgeber (9) der zweiten Überprüfungseinheiten (8) jeweils einen individuellen Zeitwert aufweisen.

5. Sicherheitssystem (1) nach mindestens einem der vorhergehenden Ansprüche, **dadurch gekennzeichnet, dass** die Positionsdaten von dem Funktransponder (6) an die erste Überprüfungseinheit (7) übermittelbar sind.

6. Sicherheitssystem (1) nach mindestens einem der vorhergehenden Ansprüche, **dadurch gekennzeichnet, dass** die Funktransponder (6) jeweils sichere Schaltausgänge (10) und/oder eine sichere Schnittstelle aufweisen.

7. Sicherheitssystem (1) nach Anspruch 6, **dadurch gekennzeichnet, dass** die sichere Schaltausgänge (10) und/oder die sichere Schnittstelle betätigt werden, wenn eine eingestellte Zeit des Zeitgeber abläuft und nicht zurückgesetzt wurde.

8. Sicherheitssystem (1) nach mindestens einem der vorhergehenden Ansprüche, **dadurch gekennzeichnet, dass** die erste Überprüfungseinheit (7) und/oder die zweite Überprüfungseinheit (8) jeweils ausgebildet ist eine Anzahl und/oder Art von Datentelegramme des Funktransponders zu überprüfen.

9. Sicherheitssystem (1) nach mindestens einem der vorhergehenden Ansprüche, **dadurch gekennzeichnet, dass** der Funktransponder (6) eine Ausgabeschnittstelle (14) für Warnungen oder Instruktionen aufweist.

10. Sicherheitssystem (1) nach mindestens einem der vorhergehenden Ansprüche, **dadurch gekennzeichnet, dass** die Funktransponder (6) eine Identifikation aufweisen, wobei jeweils ein Funktransponder (6) jeweils einem Objekt (2) zugeordnet ist, wodurch die Steuer- und Auswerteeinheit (3) ausgebildet ist, die Objekte (2) zu unterscheiden.

11. Sicherheitssystem (1) nach mindestens einem der vorhergehenden Ansprüche, **dadurch gekennzeichnet, dass** die Funktransponder (6) ausgebildet sind sichere Steuersignale für eine Einleitung von Risikominderungsmaßnahmen an die Steuer- und Auswerteeinheit (3) zu übertragen.

12. Sicherheitssystem (1) nach mindestens einem der vorhergehenden Ansprüche, **dadurch gekennzeichnet, dass** die Steuer- und Auswerteeinheit (3) ausgebildet ist sichere Steuersignale für eine Einleitung von Risikominderungsmaßnahmen an die Funktransponder (6) zu übertragen.

13. Sicherheitssystem (1) nach mindestens einem der vorhergehenden Ansprüche, **dadurch gekennzeichnet, dass** das Funkortungssystem (4) ein Ultrabreitband-Funkortungssystem ist, wobei die verwendete Frequenz im Bereich von 3,1 GHz bis 10,6 GHz ist, wobei die Sendeenergie pro Funkstation (5) maximal 0,5 mW beträgt.

14. Verfahren mit einem Sicherheitssystem (1) zur Lokalisierung von mindestens einem ortsveränderlichen Objekt (2), mit mindestens einer Steuer- und Auswerteeinheit (3), mit mindestens einem Funkortungssystem (4),
wobei das Funkortungssystem (4) mindestens drei angeordnete Funkstationen (5) aufweist,
wobei an dem Objekt (2) mindestens ein Funktransponder (6) angeordnet wird, wobei mittels dem Funkortungssystem (4) Positionsdaten des Funktransponders und damit Positionsdaten des Objekts (2) ermittelbar sind,
wobei die Positionsdaten von der Funkstation (5) des Funkortungssystems (4) an die Steuer- und Auswerteeinheit (3) übermittelbar sind,
und die Positionsdaten von dem Funktransponder (6) an die Steuer- und Auswerteeinheit (3) übermittelbar sind,
wobei
die Steuer- und Auswerteeinheit (3) ausgebildet ist, die Positionsdaten des Funktransponders (6) zyklisch zu erfassen,
wobei eine erste Überprüfungseinheit (7) vorgesehen ist, wobei die erste Überprüfungseinheit (7) mit der Steuer- und Auswerteeinheit (3) verbunden ist, wobei die Steuer- und Auswerteeinheit (3) von der ersten Überprüfungseinheit (7) überprüft wird, **dadurch gekennzeichnet, dass** die Funktransponder (6) jeweils eine zweite Überprüfungseinheit (8) aufweisen, wobei die zweite Überprüfungseinheit (8) zyklisch über ein Signal von der ersten Überprüfungseinheit (7) zurückgesetzt wird.

## Claims

1. A safety system (1) for localizing at least one object (2) with varying locations, the safety system (1) having at least one control and evaluation unit (3), and at least one radio location system (4),
wherein the radio location system (4) has at least three arranged radio stations (5);
wherein at least one radio transponder (6) is arranged at the object (2); wherein position data of the radio transponder and thus position data of the object (2) can be determined by means of the radio location system (4);
wherein the position data can be transmitted from the radio station (5) of the radio location system (4) to the control and evaluation unit (3); wherein
the control and evaluation unit (3) is configured to cyclically detect the position data of the radio transponder (6);
wherein a first inspection unit (7) is provided, with the first inspection unit (7) being connected to the control and evaluation unit (3), and with the control and evaluation unit (3) being checked by the first inspection unit (7), **characterized in that** the radio transponders (6) each have a second inspection unit (8), with the second inspection unit (8) being cyclically reset via a signal from the first transmission unit (7).

2. A safety system (1) in accordance with claim 1, **characterized in that** the position data can be transmitted from the radio transponder (6) to the control and evaluation unit (3).

3. A safety system (1) in accordance with at least one of the preceding claims, **characterized in that** the first inspection unit (7) and/or the second inspection unit (8) each has/have a timer (9).

4. A safety system (1) in accordance with claim 3, **characterized in that** the timers (9) of the second inspection units (8) each have an individual time value.

5. A safety system (1) in accordance with at least one of the preceding claims, **characterized in that** the position data can be transmitted from the radio transponder (6) to the first inspection unit (7).

6. A safety system (1) in accordance with at least one of the preceding claims, **characterized in that** the radio transponders (6) each have safe switching outputs (10) and/or a safe interface.

7. A safety system (1) in accordance with claim 6, **characterized in that** the safe switching outputs (10) and/or the safe interface is/are actuated when a set time of the timer elapses and was not reset.

8. A safety system (1) in accordance with at least one of the preceding claims, **characterized in that** the first inspection unit (7) and/or the second inspection unit (8) is/are each configured to check a number and/or a kind of data telegrams of the radio transponder.

9. A safety system (1) in accordance with at least one of the preceding claims, **characterized in that** the radio transponder (6) has an output interface (14) for warnings or instructions.

10. A safety system (1) in accordance with at least one of the preceding claims, **characterized in that** the radio transponders (6) have identification, with a respective radio transponder (6) being associated with a respective object (2), whereby the control and evaluation unit (3) is configured to distinguish the objects (2).

11. A safety system (1) in accordance with at least one of the preceding claims, **characterized in that** the radio transponders (6) are configured to transmit safe control signals for an initiation of risk reduction measures to the control and evaluation unit (3).

12. A safety system (1) in accordance with at least one of the preceding claims, **characterized in that** the control and evaluation unit (3) is configured to transmit safe control signals for an initiation of risk reduction measures to the radio transponders (6).

13. A safety system (1) in accordance with least one of the preceding claims, **characterized in that** the radio location system (4) is an ultra wideband radio location system, with the frequency used being in the range from 3.1 GHz to 10.6 GHz, with the transmission energy amounting to a maximum of 0.5 mW per radio station (5).

14. A method using a safety system (1) for localizing at least one object (2) with varying locations, the safety system (1) having at least one control and evaluation unit (3), and at least one radio location system (4), wherein the radio location system (4) has at least three arranged radio stations (5);
wherein at least one radio transponder (6) is arranged at the object (2); wherein position data of the radio transponder and thus position data of the object (2) can be determined by means of the radio location system (4);
wherein the position data can be transmitted from the radio station (5) of the radio location system (4) to the control and evaluation unit (3),
and the position data can be transmitted from the radio transponder (6) to the control and evaluation unit (3);
wherein
the control and evaluation unit (3) is configured to cyclically detect the position data of the radio transponder (6);
wherein a first inspection unit (7) is provided, with the first inspection unit (7) being connected to the control and evaluation unit (3), and with the control and evaluation unit (3) being checked by the first inspection unit (7), **characterized in that** the radio transponders (6) each have a second inspection unit (8), with the second inspection unit (8) being cyclically reset via a signal from the first transmission unit (7).

## Revendications

1. Système de sécurité (1) pour localiser au moins un objet (2) mobile, comportant au moins une unité de commande et d'évaluation (3), au moins un système de radiolocalisation (4),
dans lequel
le système de radiolocalisation (4) comporte au moins trois stations radio (5) mises en place,
au moins un transpondeur radio (6) est disposé sur l'objet (2),
des données de position du transpondeur radio et donc des données de position de l'objet (2) peuvent être déterminées au moyen du système de radiolocalisation (4),
les données de position peuvent être transmises de la station radio (5) du système de radiolocalisation (4) à l'unité de commande et d'évaluation (3), l'unité de commande et d'évaluation (3) est réalisée pour saisir cycliquement les données de position du transpondeur radio (6),
il est prévu une première unité de contrôle (7), la première unité de contrôle (7) étant reliée à l'unité de commande et d'évaluation (3), l'unité de commande et d'évaluation (3) étant contrôlée par la première unité de contrôle (7), **caractérisé en ce que** les transpondeurs radio (6) comprennent chacun une deuxième unité de contrôle (8), la deuxième unité de contrôle (8) étant réinitialisée cycliquement via un signal provenant de la première unité de contrôle (7).

2. Système de sécurité (1) selon la revendication 1, **caractérisé en ce que** les données de position peuvent être transmises du transpondeur radio (6) à l'unité de commande et d'évaluation (3).

3. Système de sécurité (1) selon l'une au moins des revendications précédentes, **caractérisé en ce que** la première unité de contrôle (7) et/ou la deuxième unité de contrôle (8) présentent chacune une horloge (9).

4. Système de sécurité (1) selon la revendication 3, **caractérisé en ce que** les horloges (9) des deuxièmes unités de contrôle (8) présentent chacune une valeur temporelle individuelle.

5. Système de sécurité (1) selon l'une au moins des revendications précédentes, **caractérisé en ce que** les données de position peuvent être transmises du transpondeur radio (6) à la première unité de contrôle (7).

6. Système de sécurité (1) selon l'une au moins des revendications précédentes, **caractérisé en ce que** les transpondeurs radio (6) présentent chacun des sorties de commutation sécurisées (10) et/ou une interface sécurisée.

7. Système de sécurité (1) selon la revendication 6, **caractérisé en ce que** les sorties de commutation sécurisées (10) et/ou l'interface sécurisée sont actionnées lorsqu'une durée réglée de l'horloge s'écoule et n'a pas été réinitialisée.

8. Système de sécurité (1) selon l'une au moins des revendications précédentes, **caractérisé en ce que** la première unité de contrôle (7) et/ou la deuxième unité de contrôle (8) sont chacune configurées pour contrôler un nombre et/ou un type de télégrammes de données du transpondeur radio.

9. Système de sécurité (1) selon l'une au moins des revendications précédentes, **caractérisé en ce que** le transpondeur radio (6) comporte une interface de sortie (14) pour des avertissements ou des instructions.

10. Système de sécurité (1) selon l'une au moins des revendications précédentes, **caractérisé en ce que** les transpondeurs radio (6) présentent une identification, un transpondeur radio (6) respectif étant associé à un objet respectif (2), ce qui permet à l'unité de commande et d'évaluation (3) de distinguer les objets (2).

11. Système de sécurité (1) selon l'une au moins des revendications précédentes, **caractérisé en ce que** les transpondeurs radio (6) sont conçus pour transmettre à l'unité de commande et d'évaluation (3) des signaux de commande sécurisés pour prendre des mesures de réduction des risques.

12. Système de sécurité (1) selon l'une au moins des revendications précédentes, **caractérisé en ce que** l'unité de commande et d'évaluation (3) est conçue pour transmettre aux transpondeurs radio (6) des signaux de commande sécurisés pour prendre des mesures de réduction des risques.

13. Système de sécurité (1) selon l'une au moins des revendications précédentes, **caractérisé en ce que** le système de radiolocalisation (4) est un système de radiolocalisation à bande ultralarge, la fréquence utilisée étant comprise dans la plage de 3,1 GHz à 10,6 GHz, l'énergie d'émission par station radio (5) étant de 0,5 mW au maximum.

14. Procédé avec un système de sécurité (1) pour localiser au moins un objet (2) mobile, comportant au moins une unité de commande et d'évaluation (3), au moins un système de radiolocalisation (4),
dans lequel
le système de radiolocalisation (4) comporte au moins trois stations radio (5) mises en place,
au moins un transpondeur radio (6) est disposé sur l'objet (2),
des données de position du transpondeur radio et donc des données de position de l'objet (2) peuvent être déterminées au moyen du système de radiolocalisation (4),
les données de position peuvent être transmises de la station radio (5) du système de radiolocalisation (4) à l'unité de commande et d'évaluation (3), et les données de position peuvent être transmises du transpondeur radio (6) à l'unité de commande et d'évaluation (3),
l'unité de commande et d'évaluation (3) est réalisée pour saisir cycliquement les données de position du transpondeur radio (6),
il est prévu une première unité de contrôle (7), la première unité de contrôle (7) étant reliée à l'unité de commande et d'évaluation (3), l'unité de commande et d'évaluation (3) étant contrôlée par la première unité de contrôle (7), **caractérisé en ce que** les transpondeurs radio (6) comprennent chacun une deuxième unité de contrôle (8), la deuxième unité de contrôle (8) étant réinitialisée cycliquement via un signal provenant de la première unité de contrôle (7).
